Europäisches Patentamt

European Patent Office

Office européen des brevets

(11) Numéro de publication: **0 274 918**
A1

## DEMANDE DE BREVET EUROPEEN

(21) Numéro de dépôt: **87400048.2**

(22) Date de dépôt: **12.01.87**

(51) Int. Cl.4 **B60P 1/64**

(43) Date de publication de la demande:
**20.07.88 Bulletin 88/29**

(84) Etats contractants désignés:
**AT BE CH DE ES FR GB GR IT LI LU NL SE**

(71) Demandeur: **Amiel, Raoul**
**La Bégude RN 113**
**F-34290 Servian(FR)**

(72) Inventeur: **Amiel, Raoul**
**La Bégude RN 113**
**F-34290 Servian(FR)**

(74) Mandataire: **Chauchard, Robert et al**
**c/o Cabinet Malémont 42, avenue du**
**Président Wilson**
**F-75116 Paris(FR)**

(54) **Véhicule de transport à chargement et déchargement rapide et structure porteuse de charge, telle qu'un plateau, équipant ce véhicule.**

(57) La présente invention concerne un véhicule de transport du type comprenant une structure porteuse de charge (5), telle qu'un plateau, une benne, une citerne ou autre, qui repose sur le châssis (2) du véhicule, ainsi qu'une structure porteuse de charge conçue pour équiper ce véhicule. Cette structure porteuse de charge (5) est montée amovible sur le châssis (2) et porte des béquilles escamotables (8a, 8b), convenablement réparties, de préférence le long de ses bords longitudinaux, pour, en position déployée verticale, constituer des appuis au sol pour la structure porteuse de charge séparée du châssis du véhicule, ces béquilles (8a, 8b) pouvant être rabattues et fixées sur ladite structure (5).

Le véhicule selon l'invention est en outre équipé d'un dispositif de relevage de la structure porteuse de charge (5), de préférence constitué par des vérins portés par le châssis (2). Des moyens de centrage et des mécanismes de verrouillages libérables sont en outre prévus pour positionner correctement et immobiliser ladite structure (5) sur le châssis.

Application en particulier aux camions de fort tonnage.

FIG. 1

EP 0 274 918 A1

## Véhicule de transport à chargement et déchargement rapide et structure porteuse de charge, telle qu'un plateau, équipant ce véhicule

La présente invention concerne un véhicule de transport du type comprenant une structure porteuse de charge, telle qu'un plateau, une benne, une citerne ou autre, qui repose sur le châssis du véhicule, ainsi qu'une structure porteuse de charge conçue pour équiper ce véhicule.

Comme on le sait, le chargement et le déchargement d'un camion, objet après objet et même palette après palette, sont des opérations relativement longues qui immobilisent le camion pendant une période de temps improductive prolongée.

Dès lors, un souci constant des transporteurs routiers a été de chercher à réduire au maximum cette période d'immobilisation en vue d'une meilleure rentabilisation de leurs camions en utilisation routière. C'est ainsi qu'ont été mis au point des dispositifs de chargement-déchargement rapide de type pendulaire, tels que celui qui fait l'objet de la demande de brevet français n°85 01599, au nom du présent demandeur.

Il s'est avéré toutefois qu'un tel dispositif pendulaire, qui est monté à demeure sur le camion pour réaliser en une seule fois son chargement ou son déchargement, ne peut être utilisé que sur des camions de faible tonnage. En effet, sur des camions de fort tonnage, c'est-à-dire de grande longueur, et notamment sur les semi-remorques, ce dispositif présenterait l'inconvénient d'imposer des bras de suspension hors-gabarit.

La présente invention s'est donc fixé pour but de résoudre le problème du temps d'immobilisation des véhicules de transport, et notamment des camions de fort tonnage, lors de leur chargement et de leur déchargement et, pour ce faire, elle propose un véhicule de transport du type spécifié en préambule qui se caractérise en ce que la structure porteuse de charge est montée amovible sur le châssis et porte des béquilles escamotables convenablement réparties pour, en position déployée verticale, constituer des appuis au sol pour la structure porteuse de charge séparée du châssis du véhicule.

Selon un mode de réalisation préféré de l'invention, la structure porteuse de charge est pourvue, le long de chacun de ses bords longitudinaux, de deux béquilles qui sont articulées en des points situés à grande distance l'un de l'autre, de part et d'autre du point milieu du bord longitudinal correspondant, et portent chacune un moyen de fixation pour leur accrochage à ce dernier en position repliée.

De la sorte, on peut en plaçant les béquilles dans leur position verticale, faire reposer la structure porteuse de charge sur le sol après l'avoir désolidarisée du châssis du véhicule et, dès lors, le véhicule sera libéré pour d'autres transports pendant la réalisation de l'opération de chargement ou de déchargement. A l'inverse, une fois que la structure porteuse, chargée ou vide, aura été remise en place sur le châssis du véhicule, les béquilles pourront être repliées et accrochées aux bords longitudinaux de la structure et le véhicule retrouvera sa forme d'origine de transporteur routier.

En définitive, grâce à l'invention, on parvient au résultat que le temps passé au chargement et au déchargement d'un véhicule de transport ne s'ajoute plus à la durée des trajets, si bien que le véhicule de transport sera rentabilisé au maximum.

Avantageusement. chaque béquille est associée à une jambe de force articulée par une extrémité. sur la structure porteuse de charge et apte à être fixée de façon non-définitive, par sa seconde extrémité, à la béquille, une fois celle-ci placée dans sa position déployée verticale.

Ces jambes ont bien entendu pour fonction de renforcer les béquilles en position verticale d'appui au sol et donc d'affermir la stabilité de la structure porteuse de charge sur le sol, tout en pouvant être escamotées, de la même façon, que les béquilles, lorsque la structure est en position de transport sur le véhicule.

Selon une autre caractéristique avantageuse de l'invention, chaque béquille est articulée à l'intérieur d'une chape qui est elle-même montée à l'extrémité libre d'un bras télescopique horizontal solidaire, par son autre extrémité, de la structure porteuse de charge et orienté dans une direction sensiblement perpendiculaire au plan longitudinal médian de cette dernière.

Grâce à cette disposition, les béquilles pourront être écartées latéralement vers l'extérieur, pour, lorsque le véhicule se dégagera de la structure porteuse de charge, libérer le maximum de place en largeur, notamment pour le passage des roues.

Par ailleurs, pour autoriser ce dégagement du véhicule, il pourra être nécessaire, avant de faire reposer la structure porteuse sur le sol par ses béquilles. de la relever suffisamment au-dessus du châssis du véhicule, ce qui pourra être fait par un appareillage extérieur au véhicule ou au moyen d'un dispositif de relevage intégré au châssis de ce dernier.

Dans sa forme de réalisation la plus simple, ce dispositif de relevage comprendra alors plusieurs vérins à commande synchronisée, fixés au châssis du véhicule avec leurs tiges dirigées vers la face inférieure de la structure porteuse de charge, ces vérins étant uniformément répartis de part et d'autre respectivement du plan longitudinal médian et du plan transversal médian de ladite structure. Bien évidemment, ces vérins seront également utilisés pour remettre en place, par abaissement progressif, la structure porteuse de charge sur le châssis du véhicule.

Par ailleurs, ces vérins seront soit des vérins hydrauliques ou pneumatiques, auquel cas ils seront commandés, depuis la source de fluide sous pression du véhicule, par l'intermédiaire d'un circuit répartiteur de débit, soit de simples vérins à vis à commande manuelle.

Il est également envisageable de remplacer l'ensemble de vérins à action direct, par un seul vérin qui manoeuvrerait la structure porteuse de charge par l'intermédiaire d'un jeu de bielles articulées répartissant les efforts en au moins quatres points de cette dernière.

Selon une autre caractéristique intéressante de l'invention, chaque vérin du dispositif de relevage porte, à l'extrémité libre de sa tige, un rouleau fou d'axe horizontal situé en regard d'un second rouleau fou monté à rotation autour d'un axe horizontal sensiblement orthogonal à celui du premier rouleau, sur la face inférieure de la structure porteuse de charge.

Comme on le comprendra, les différents couples de rouleaux fous orthogonaux, lorsque les vérins interviennent pour abaisser sur le châssis la structure porteuse de charge, permettent un libre déplacement de cette dernière dans deux directions perpendiculaires, en vue de son centrage par rapport au plan longitudinal médian et/ou au plan transversal médian du véhicule.

Là encore, ce centrage pourra se faire automatiquement à l'aide de moyens directement intégrés dans la structure du véhicule et, dans un mode de réalisation préféré, ces moyens de centrage automatique comprennent, d'une part, un ou plusieurs plans inclinés formés sur le châssis de chaque côté du plan longitudinal médian et/ou respectivement du plan transversal médian de ce dernier et, d'autre part, des bras de centrage qui pendent sous la structure porteuse de charge en faisant face aux plans inclinés du châssis, chacun par une surface inclinée de même pente que ces derniers, chaque bras de centrage portant un galet fou à l'extrémité inférieure de sa surface inclinée.

Avec ces moyens, le centrage de la structure porteuse de charge est bien obtenu automatiquement comme conséquence du positionnement progressif de ses surfaces inclinées contre les plans inclinés du châssis, positionnement qui est favorisé par l'action des galets fous éliminant les frottements.

Enfin, pour des raisons de sécurité, l'invention prévoit que chaque vérin est associé à un mécanisme destiné à verrouiller automatiquement la structure porteuse de charge sur le châssis du véhicule, mécanisme qui coopère avec la tige du vérin pour, lors des mouvements de rétraction et d'extension de cette dernière, être amené respectivement dans sa position de verrouillage et sa position de déverrouillage.

Dans un mode de réalisation préféré, chacun de ces mécanismes de verrouillage se compose d'un crochet articulé sur le corps du vérin associé et comportant un bec de verrouillage susceptible de venir en prise avec un doigt d'accrochage solidaire de la structure porteuse de charge, ledit crochet présentant en outre, d'un côté de son axe d'articulation, un méplat placé sur le trajet descendant d'un ergot porté par l'extrémité supérieure de la tige du vérin et, de l'autre côté dudit axe d'articulation, un appendice qui est relié au corps du vérin par un ressort de rappel dont l'action s'oppose au mouvement pivotant du bec de verrouillage vers le doigt d'accrochage.

Comme il est aisé de le comprendre, à chaque mouvement de rétraction, les vérins, par l'ergot de leur tige, feront basculer les becs de verrouillage pour les amener progressivement en prise avec les doigts de la structure porteuse de charge à l'encontre de la force du ressort de rappel. Le verrouillage ainsi réalisé de cette dernière sur le châssis éliminera tout risque de séparation de la structure porteuse lors du déplacement du véhicule, notamment en cas de dévers important de ce dernier ou sous l'effet des forces centrifuges. A l'inverse, lorsque les vérins agiront en extension pour relever à l'arrêt la structure porteuse de charge, l'action exercée par l'ergot de la tige des vérins sur le méplat de chacun des crochets sera supprimée et, dès lors, les becs de verrouillage seront progressivement dégagés de leur emprise avec les doigts de la structure par la force de rappel du ressort, pour désolidariser cette dernière du châssis du véhicule en vue de sa mise en place sur le sol.

Un mode de réalisation du véhicule de transport conforme à l'invention va maintenant être décrit plus en détails, mais uniquement à titre d'exemple non-limitatif, en référence aux dessins annexés dans lesquels:

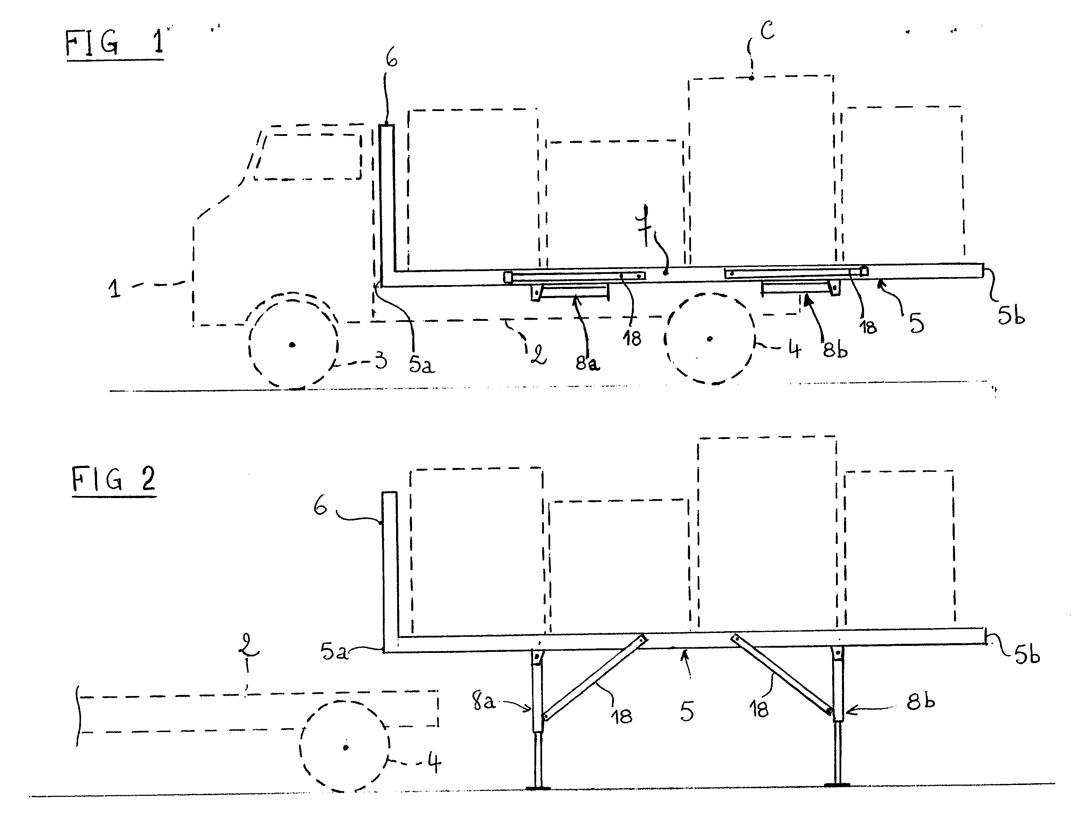

. la figure 1 est une vue de côté - schématique de ce véhicule muni d'un plateau porteur de charge représenté en position de transport ;

. la figure 2 est une vue similaire à la figure 1, mais montrant le plateau reposant sur le sol en position de chargement-déchargement :

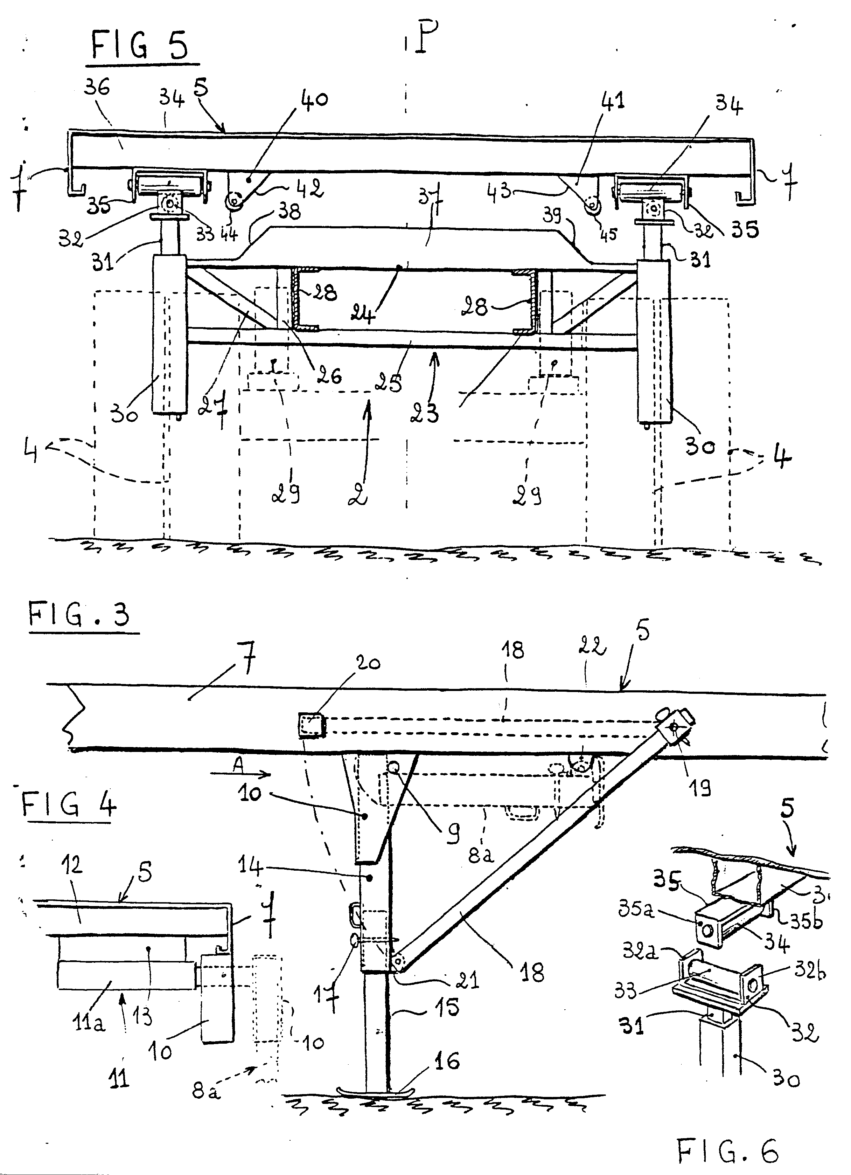

. la figure 3 est une vue de côté partielle du plateau seul, montrant plus précisément l'une des béquilles d'appui au sol dans ses deux positions ;

. la figure 4 est une vue de détail faite dans le sens de la flèche A de la figure 3 ;

. la figure 5 est une vue arrière, à plus grande échelle, du véhicule de la figure 1, montrant plus précisément le dispositif de relevage et le dispositif de centrage du plateau ;

. la figure 6 est une vue en perspective d'un détail du dispositif de relevage visible sur la figure 5 ; et

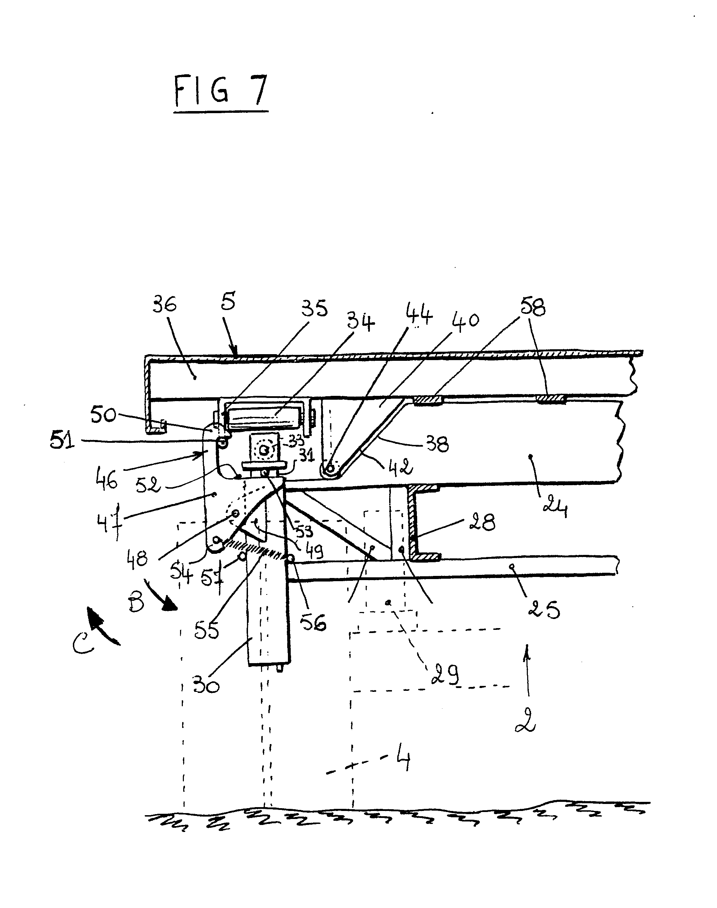

. la figure 7 est une demi-vue arrière agrandie du camion, correspondant à la figure 5 et illustrant un mécanisme de verrouillage du plateau.

La figure 1 illustre un véhicule de transport, en l'occurrence un camion à plateau de fort tonnage, avec, sous une représentation schématique en traits interrompus, sa cabine 1, son châssis arrière 2 et ses roues avant 3 et arrière 4. Le plateau 5 du camion, qui supporte le chargement C, est rectangulaire et repose sur le châssis 2 en se terminant à l'avant, au dos de la cabine 1, par un garde-fou vertical 6.

Selon la caractéristique première de l'invention, le plateau 5 du camion est monté amovible sur le châssis 2, à l'aide de mécanismes de verrouillage libérables qui seront décrits plus loin, et porte, sous chacun de ses longerons latéraux longitudinaux 7, une béquille escamotable avant 8a et une béquille escamotable arrière 8b.

Dans l'exemple représenté, les béquilles 8a et 8b sont respectivement articulées autour d'axes horizontaux perpendiculaires aux longerons 7, en des points situés sensiblement à mi-distance du milieu de ce dernier et respectivement de son extrémité avant 5a et de son extrémité arrière 5b.

De la sorte, chaque béquille 8a, 8b peut être amenée par pivotement, soit dans une position de repos, représentée sur la figure 1 et dans laquelle elle est rabattue sous le longeron 7 du plateau, soit dans une position verticale d'appui au sol, représentée sur la figure 2 dans laquelle on peut la placer manuellement après avoir désolidarisé le plateau 5 du châssis 2 du véhicule et l'avoir relevé d'une manière qui sera aussi décrite plus loin.

La figure 3 représente une béquille avant 8a qui va maintenant être décrite en détail. Les béquilles arrière 8b ayant une structure symétrique à celle des béquilles avant par rapport au plan transversal médian du plateau 5, ne feront pas quant à elles l'objet d'une description particulière.

Ainsi qu'on peut le voir sur la figure 3, chaque béquille 8a est en fait articulée, par un pivot 9, à l'intérieur d'une chape 10 qui, comme le montre la figure 4, est pour sa part fixée à l'extrémité libre d'un bras télescopique horizontal 11, à commande hydraulique, orienté dans une direction perpendiculaire à l'axe longitudinal du plateau 5, la partie fixe 11a de ce bras télescopique étant solidaire d'un longeron transversal 12 du plateau 5, par une monture renforcée 13.

Par ailleurs, la chape 10 présente, en coupe horizontale, la forme d'un U ouvert en direction du plan transversal médian pour ainsi servir de butée d'immobilisation en position verticale de la béquille 8a.

La figure 3 montre encore que chaque béquille 8a se présente sous une forme télescopique, en étant plus précisément constituée par un tube supérieur 14 dans lequel est engagé à coulissement un pied 15 qui se termine par une semelle 16 d'appui au sol. Le pied 15 est immobilisé à la bonne hauteur par une goupille 17 engagée dans un trou choisi dans une rangée de trous étagés.

En outre, chaque béquille est renforcée, dans sa position verticale d'appui au sol, par une jambe de force 18 agissant à l'opposé de la chape 10. Chaque jambe de force 18 est articulée en 19 sur la face extérieure du longeron latéral 7 correspondant, pour pouvoir être soit placée en position horizontale contre ce longeron (traits interrompus sur la figure 3), auquel cas la jambe de force est retenue sur celui-ci par un crochet 20, soit abaissée en position inclinée pour être accrochée par une goupille à une oreille 21 située à la base du tube supérieur 14 de la béquille 8a (traits pleins sur la figure 3).

On observera encore sur la figure 3, que la béquile télescopique 8a peut, après avoir été décrochée de la jambe de force 18 et complètement rétractée, être rabattue par pivotement sous le longeron 7, dans sa position de repos sensiblement horizontale, et être retenue dans cette position par goupillage de son oreille 21 sur une patte 22 solidaire du longeron 7.

En se reportant maintenant à la figure 5, on peut y voir représenté une poutre transversale arrière 23 qui constitue un élément de la charpente du châssis du véhicule, perpendiculaire à l'axe longitudinal de ce dernier. Cette poutre transversale 23 se compose plus précisément d'une traverse supérieure 24 et d'une traverse inférieure 25 réunies, au niveau de leurs extrémités latérales respectives, par des entretoises verticales 26 et des bras de triangulation 27. La poutre transversale 23 est positionnée en fait en arrière des points d'articulation des béquilles arrière 8b et est réunie, par des longerons longitudinaux centraux 28, à une poutre transversale avant identique (non représentée) qui s'étend quant à elle en avant des points d'articulation des béquilles avant 8a. La figure 5 montre encore, en traits interrompus, les roues jumelées arrière 4 du véhicule et les organes de suspension associés 29.

Selon une caractéristique importante de l'invention. chaque poutre transversale arrière 23, tout comme chaque poutre transversale avant non-représentée. porte à chacune de ses extrémités latérales, un vérin vertical 30 dont la tige 31 est dirigée vers la face inférieure du plateau 5. Comme on le comprendra, ces quatre vérins 30 permettront d'assurer le relevage susmentionné du plateau 5 de même qu'à l'inverse la pose, par l'abaissement progressif de ce dernier sur le châssis 2.

Comme on peut mieux le voir la figure 6, à l'extrémité libre supérieure de la tige 31 de chaque vérin 30, est soudée une chape en forme de U 32 dans laquelle est montée à rotation libre un rouleau horizontal 33 sensiblement paralèlle au plan longitudinal médian P du véhicule. Chacun de ces rouleaux 33 est postionné en face d'un second rouleau horizontal 34, lui aussi monté à rotation libre dans une chape en forme de U 35 soudée pour sa part sur le dessous d'un longeron transversal 36 du plateau 5, dans une position telle que les axes des deux rouleaux 33, 34 soient orthogonaux entre eux. On observera encore sur la figure 6, que les branches latérales 32a, 32b et 35a, 35b de chacune des chapes 32, 35 font saillie au-delà du rouleau respectif 33 ou 34 qu'elles portent.

Les quatre vérins 30 seront en général des vérins hydrauliques ou pneumatiques qui, d'une manière non illustrée par les figures, sont actionnés, depuis la source de fluide sous pression du véhicule, par l'intermédiaire d'un répartiteur général de fluide suivi de deux répartiteurs secondaires, dont l'un contrôle les deux vérins de droite et l'autre les deux vérins de gauche. En variante, un seul répartiteur de débit peut être prévu pour assurer l'équilibre du débit entre les deux vérins avant montés en série et les deux vérins arrière également montés en série.

Il va de soi que les quatre vérins hydrauliques ou pneumatiques peuvent être remplacés par de simples vérins à vis à commande manuelle.

Par ailleurs, à la place des quatre vérins 30 hydrauliques, pneumatiques ou à vis, on peut prévoir un seul vérin central qui manoeuvrerait alors le plateau 5, par l'intermédiaire d'un jeu de bielles articulées répartissant son effort de façon égale au niveau des quatre points de contact du plateau 5 et du châssis 2, matérialisés par les couples de rouleaux 33, 34.

En revenant à la figure 5, on peut encore constater que la traverse supérieure 24 de la poutre transversale arrière 23 du châssis 2, qui possède une épaisseur relativement grande comparable à la longueur des rouleaux 33 ou 34, présente sur le haut une partie centrale surélevée 37 s'étendant sur des longueurs égales de part et d'autre du plan longitudinal médian P du châssis 2 du véhicule. A ses deux extrémités latérales, cette partie surélevée 37 se termine par deux plans inclinés vers le haut 38, 39, qui sont symétriques par rapport à ce même plan P.

Par ailleurs, deux bras triangulaires 40, 41, symétriques par rapport au plan longitudinal médian P du châssis 2, pendent sous le plateau 5 tout en étant respectivement positionnés en face des deux plans inclinés 38, 39 du châssis 2. La surface 42 ou 43 de chaque bras 40 ou, 41, tournée vers le plan incliné respectif 38 ou 39 du châssis 2, est elle-même inclinée suivant la même pente et la même direction que ce plan incliné tout en étant exactement à l'aplomb de celui-ci. Enfin, chaque bras triangulaire 40, 41 porte à sa pointe inférieure un galet fou 44 ou 45.

Comme on le comprendra par la suite, les deux plans inclinés 38, 39 du châssis 2 et les deux bras triangulaires 40, 41 du plateau 5, qui seront prévus de la même façon à l'avant du véhicule, constituent un dispositif pour centrer, par rapport au plan longitudinal médian P, le plateau 5 lors de sa pose sur le châssis 2. Il est à noter qu'un dispositif de centrage identique peut être prévu dans la direction longitudinale du véhicule pour réaliser de la même façon le centrage du plateau 5 par rapport au plan transversal médian du véhicule.

La figure 7 représente l'un des mécanismes de verrouillage libérables mentionnés plus haut, grâce auxquels le plateau 5 est solidarisé au châssis 2, dans sa position de transport représentée sur la figure 1, ce mécanisme étant ici dans sa position active de verrouillage.

Ce mécanisme de verrouillage est essentiellement constitué par un crochet 46 qui présente une partie inférieure élargie 47 par laquelle il est articulé en 48 sur une patte 49 solidaire du corps du vérin 30. A sa partie haute, le crochet 46 comporte un bec de verrouillage 50 qui est en prise avec un doigt d'accrochage 51 solidaire de la chape 35 du rouleau 34 et sensiblement parallèle à l'axe d'articulation 48 du crochet 46.

Comme on peut le voir, la partie inférieure 47 du crochet 46 présente, au-dessus de l'axe 48, un méplat 52, contre lequel s'applique un ergot 53 saillant sur l'extrémité supérieure de la tige 31 du vérin 30. Au-dessous de l'axe d'articulation 48, la partie inférieure 47 du crochet se prolonge par un appendice 54 sur lequel s'accroche l'une des extrémités d'un ressort de rappel 55 dont l'autre extrémité est ancrée en 56 sur le corps du vérin 30.

On va maintenant exposer le mode d'utilisation du véhicule de transport selon l'invention, qui vient d'être décrit.

On suppose au départ que le véhicule est, comme représenté sur la figure 1, muni de son plateau 5 chargé, lequel repose et est fixé sur le châssis 2 du véhicule de la manière illustrée par la figure 7.

En vue du déchargement du véhicule, on commence par actionner les quatre vérins 30 dans le sens d'une extension vers le haut de leur tige 31, pour qu'ils soulèvent le plateau 5 au-dessus du châssis 2, comme représenté sur la figure 5, par l'intermédiaire de leurs rouleaux 33 s'appliquant contre les rouleaux 34 situés sous le plateau, le plateau étant soulevé jusqu'à ce que les galets 44, 45 des bras 40, 41 soient au-dessus de la traverse supérieure 24 de la poutre 23.

Bien que les rouleaux 33, 34 soient en contact mutuel pivotant et donc instable, il ne pourront se séparer l'un de l'autre grâce à la présence des butées d'arrêt constituées par les branches latérales surélevées 32a, 32b et 35a, 35b de leurs chapes 32, 35.

Au cours du mouvement d'extension des vérins 30, les ergots 53 de leurs tiges 31 libèrent progressivement le crochet 46 si bien que celui-ci pivotera vers le bas, dans le sens de la flèche B, sous l'action de la force de rappel du ressort 55.

Dès lors, les becs de verrouillage 50 des quatre crochets se sépareront des doigts correspondants 51 pour désolidariser automatiquement le plateau relevé 5 du châssis 2. Il est à noter ici que le mouvement de pivotement vers le bas de chaque crochet 46 est limité par un ergot 57 saillant sur le corps du vérin correspondant 30.

Une fois le plateau en position relevée, on descend les béquilles télescopiques 8a, 8b, on les déploie à la bonne hauteur et on les clavette à l'aide de goupilles 17 pour les amener verticalement en appui sur le sol, non sans les avoir préalablement écartées légèrement vers l'extérieur en allongeant leurs bras télescopiques 1. Dans le même temps, les jambes de force 18 sont dépliées et fixées aux béquilles. Ensuite, les vérins 30 sont simultanément rétractés, posant le plateau 5 sur le sol, comme représenté sur la figure 2. Dès lors, le camion nu peut être extrait du plateau pour effectuer d'autres opérations de transport pendant le déchargement de ce dernier, ce qui concourt à une rentabilisation optimale du camion.

Pour remettre en place le plateau 5, vide ou rechargé, sur le châssis 2 du camion, on commerce par reculer ce dernier sous le plateau, jusqu'à ce que chaque rouleau 34 soit approximativement à la verticale du rouleau correspondant 33, puis on déploie les vérins 30 jusqu'à la mise en contact mutuel de ces rouleaux. On replie alors les béquilles 8a, 8b et les jambes de force 18 et on les accroche sur les longerons longitudinaux 7 du plateau 5 avant de rétracter les vérins 30.

Au cours de la rétraction des vérins, le plateau s'assied sur le châssis tout en se centrant automatiquement sur celui-ci par suite du positionnement progressif des surfaces inclinées 42, 43 des bras 40, 41, sur les plans inclinés 38, 39 du châssis 2, guidé par les galets 44, 45 roulant sur ces derniers.

Au cours de ce centage, qui se fait aussi bien par rapport au plan longitudinal médian P que par rapport au plan transversal médian du châssis 2, le plateau 5 a toute liberté de se déplacer horizontalement pour se positionner, grâce au contact mobile des rouleaux 33, 34. En position complètement abaissée, le plateau 5 repose sur les poutres transversales 23 du châssis 2 par l'intermédiaire de plats-entretoisés 58.

Par ailleurs, au fur et à mesure que les vérins 30 se rétractent, les ergots 53 de leurs tiges 31, en appuyant sur le méplat 52 des crochets associés 46, font basculer ces derniers vers le haut (flèche C de la figure 7) à l'encontre de la force de rappel du ressort 55, pour en fin de course descendante des tiges des vérins, amener les becs de verrouillage 50 en prise avec les doigts d'accrochage 51 du plateau 5 et par là-même solidariser fermement ce dernier au châssis 2 du camion, en vue de son utilisation en transporteur routier.

Bien que l'invention ait été décrite ci-dessus en référence à un véhicule de transport à plateau nu, il va de soi qu ses principes sont applicables quelle que soit la structure porteuse de chare équipant le véhicule, cette structure pouvant être constituée en variante par une benne, une citerne, un plateau bâché, un plateau-fourgon, etc.

**Revendications**

1. Véhicule de transport du type comprenant une structure porteuse de charge (5), telle qu'un plateau, une benne, une citerne ou autre, qui repose sur le châssis (2) du véhicule, caractérisé en ce que la structure porteuse de charge (5) est montée amovible sur le châssis (2) et porte des béquilles escamotables (8a, 8b), convenablement réparties pour, en position déployée verticale, constituer des appuis au sol pour la structure porteuse de charge séparée du châssis du véhicule.

2. Véhicule de transport selon la revendication 1, caractérisé en ce que la structure porteuse de charge est pourvue, le long de chacun de ses bords longitudinaux (7), de deux béquilles (8a, 8b) qui sont articulées en des points (9) situés à grande distance l'un de l'autre, de part et d'autre du point milieu du bord longitudinal correspondant, et portent chacune un moyen de fixation (21) pour leur accrochage à ce dernier en position repliée.

3. Véhicule de transport selon la revendication 1 ou 2, caractérisé en ce que chaque béquille (8a, 8b) est articulée à l'intérieur d'une chape (10) qui est elle-même montée à l'extrémité libre d'un bras télescopique horizontal (11) solidaire, par son autre extrémité, à la structure porteuse de charge (5) du véhicule et orienté dans une direction sensiblement perpendiculaire au plan longitudinal médian de cette dernière.

4. Véhicule de transport selon l'une quelconque des revendications 1 à 3, caractérisé en ce que chaque béquille (8a, 8b) est associée à une jambe de force (18) articulée, par une extrémité, sur la structure porteuse de charge (5) et apte à être fixée de façon non-définitive, par sa seconde extrémité, à la béquille, une fois celle-ci placée dans sa position déployée verticale.

5. Véhicule de transport selon l'une quelconque des revendications 1 à 4, caractérisé en ce que son châssis (2) porte un dispositif de relevage de la structure porteuse de charge (5).

6. Véhicule de transport selon la revendication 5, caractérisé en ce que le dispositif de relevage comprend plusieurs vérins (30) à commande synchronisée, fixés au châssis (2) du véhicule avec leurs tiges (31) dirigées vers la face inférieure de la structure porteuse de charge (5), ces vérins étant uniformément répartis de part et d'autre respectivement du plan longitudinal médian (P) et du plan transversal médian de ladite structure.

7. Véhicule de transport selon la revendication 6, caractérisé en ce que chaque vérin (30) porte, à l'extrémité libre de sa tige (31), un rouleau fou (33) d'axe horizontal situé en regard d'un second rouleau fou (34) monté à rotation autour d'un axe horizontal sensiblement orthogonal à celui du premier rouleau, sur la face inférieure de la structure porteuse de charge (5).

8. Véhicule de transport selon la revendication 6 ou 7, caractérisé en ce que chaque vérin (30) est associé à un mécanisme destiné à verrouiller automatiquement la structure porteuse de charge (5) sur le châssis (2) du véhicule, mécanisme qui coopère avec la tige (31) du vérin pour, lors des mouvements de rétraction et d'extension de cette dernière, être amené respectivement dans sa position de verrouillage et sa position de déverrouillage.

9. Véhicule de transport selon la revendication 8, caractérisé en ce que chaque mécanisme de verrouillage se compose d'un crochet (46) articulé sur le corps du vérin associé (30) et comportant un bec de verrouillage (50) susceptible de venir en prise avec un doigt d'accrochage (51) solidaire de la structure porteuse de charge (5), ledit crochet présentant en outre, d'un côté de son axe d'articulation (48), un méplat (52) destiné à entrer en contact avec un ergot (53) porté par l'extrémité supérieure de la tige du vérin et, de l'autre côté dudit axes d'articulation, un appendice (54) qui est relié au corps du vérin par un ressort de rappel (55) dont l'action s'oppose au mouvement pivotant du bec de verrouillage vers le doigt d'accrochage.

10. Véhicule de transport selon l'une quelconque des revendications 1 à 9, caractérisé en ce qu'il comprend des moyens de centrage pour centrer automatiquement la structure porteuse de charge (5) par rapport au plan longitudinal médian (P) et/ou au plan transversal médian du châssis (2) du véhicule, lors du positionnement de ladite structure sur ce dernier.

11. Véhicule de transport selon la revendication 10, caractérisé en ce que lesdits moyens de centrage comprennent, d'une part, un ou plusieurs plans inclinés (38, 39) formés sur le châssis (2), de chaque côté du plan longitudinal médian (P) et/ou respectivement du plan transversal médian de ce dernier et, d'autre part, des bras de centrage (40, 41) qui pendent, sous la structure porteuse de charge (5) en faisant face aux plans inclinés du châssis, chacun par une surface inclinée (42, 43) de même pente que ces derniers, chaque bras de centrage portant un galet fou (44, 45) à l'extrémité inférieure de sa surface inclinée.

12. Structure porteuse de charge amovible (5), telle qu'un plateau, une benne ou une citerne, pour un véhicule de transport , caractérisée en ce qu'elle est conçue comme défini dans les revendications 1 à 11.

FIG 1

FIG 2

0 274 918

FIG 5

FIG. 3

FIG 4

FIG. 6

FIG 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 577 274 (S.A. V.I.E.M.) <br><br> * En entier * <br><br> --- | 1-6,8, 10 | B 60 P 1/64 |
| X | FR-A-2 138 567 (SERMA) <br><br> * Revendications 1,4,5 * <br><br> --- | 1-3,5, 6 | |
| X | FR-A-2 203 766 (PROTOMATIC) <br> * En entier * <br><br> --- | 1,5 | |
| X | US-A-3 152 709 (FOWLER) <br> * Figures 1,3,4; revendication 1 * <br><br> --- | 1-4 | |
| X | FR-A- 543 940 (MEYER) <br><br> * En entier * <br><br> --- | 1,5,10 ,11 | DOMAINES TECHNIQUES RECHERCHES (Int. Cl.4) <br><br> B 60 P 1/64 |
| X | DE-A-3 334 656 (SCHÖRLING) <br> * Figure 4; revendications 1-7 * <br><br> ----- | 1,5 | |

Le présent rapport de recherche a été établi pour toutes les revendications

| Lieu de la recherche <br> LA HAYE | Date d'achèvement de la recherche <br> 04-09-1987 | Examinateur <br> SCHMITTER J.M. |
|---|---|---|